# EUROPEAN PATENT SPECIFICATION

(11) **EP 4 354 642 B1**
(45) Date of publication and mention of the grant of the patent: **14.10.2026**
(21) Application number: 21965478.7
(22) Date of filing: 17.12.2021
(51) Int. Cl.: H01M 50/474, H01M 50/55, H01M 50/188, H01M 50/179, H01M 50/536, H01M 50/545, H01M 50/559, H01M 10/04, H01M 10/0587, H01M 50/152, H01M 50/538, H01M 50/566

(54) **BATTERY CELL, AND METHOD AND DEVICE FOR MANUFACTURING BATTERY CELL, BATTERY, AND POWER CONSUMING DEVICE**
BATTERIEZELLE UND VERFAHREN UND VORRICHTUNG ZUR HERSTELLUNG EINER BATTERIEZELLE, BATTERIE UND STROMVERBRAUCHENDE VORRICHTUNG
ÉLÉMENT DE BATTERIE, ET PROCÉDÉ ET DISPOSITIF DE FABRICATION D'ÉLÉMENT DE BATTERIE, BATTERIE ET DISPOSITIF CONSOMMATEUR D'ÉNERGIE

(30) Priority: 26.11.2021 WO PCT/CN2021/133705
(43) Date of publication of application: 17.04.2024
(60) Divisional application: 26200149.8 / 4 819 368
(73) Proprietor: Contemporary Amperex Technology (Hong Kong) Limited, Central, Hong Kong (HK)
(72) Inventor: XU, Hu, Ningde, Fujian 352100 (CN); HUANG, Siying, Ningde, Fujian 352100 (CN); JIN, Haizu, Ningde, Fujian 352100 (CN); NIU, Shaojun, Ningde, Fujian 352100 (CN); ZHU, Wenqi, Ningde, Fujian 352100 (CN)
(74) Representative: Ran, Handong
(86) International application number: PCT/CN2021/139357
(87) International publication number: WO 2023/092758

(56) References cited:
- WO-A1-2019/186850
- WO-A1-2021/065340
- CN-A- 1 601 783
- CN-A- 103 872 274
- CN-A- 105 206 787
- CN-A- 107 768 586
- CN-A- 112 271 412
- US-A1- 2022 181 726

## Description

### TECHNICAL FIELD

This application relates to the technical field of batteries, and more specifically, to a battery cell, a battery cell manufacturing method, a battery, and an electrical device.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

In the battery technology, both safety and performance of a battery cell need to be considered. The energy density of the battery cell affects the performance of the battery. Therefore, how to increase the energy density of the battery cell is an urgent technical problem in the battery technology.
Document WO2021065340A1 describes a secondary battery having a battery element, the battery element including a positive electrode, a negative electrode, flexible flat and columnar exterior members housing the battery element, each exterior member having a sealing section at one end only, wherein at the sealing section, the exterior members facing each other are joined to each other.

### SUMMARY

This application provides a battery cell, a battery cell manufacturing method and equipment, a battery, and an electrical device to improve the energy density and safety of the battery cell. The invention is set out in the appended set of claims.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to some embodiments of this application;
FIG. 2 is a schematic exploded view of a battery according to some embodiments of this application;
FIG. 3 is a schematic cross-sectional view of a battery cell according to some embodiments of this application;
FIG. 4 is a schematic close-up view of a circled part A of the battery cell shown in FIG. 3;
FIG. 5 is a schematic diagram of the electrode assembly and insulator shown in FIG. 3 during assembling;
FIG. 6 is a partial cross-sectional view of FIG. 5 sectioned along a B-B line;
FIG. 7 is another schematic diagram of the electrode assembly and insulator shown in FIG. 5 during assembling;
FIG. 8 is a partial cross-sectional view of FIG. 7 sectioned along a C-C line;
FIG. 9 is a schematic structural diagram of an insulator of a battery cell according to some other embodiments of this application;
FIG. 10 is a schematic structural diagram of an insulator of a battery cell according to still other embodiments of this application;
FIG. 11 is a partial cross-sectional view of a battery cell according to some other embodiments of this application;
FIG. 12 is a partial cross-sectional view of a battery cell according to still other embodiments of this application;
FIG. 13 is a schematic flowchart of a battery cell manufacturing method according to some embodiments of this application; and
FIG. 14 is a schematic block diagram of battery cell manufacturing equipment according to some embodiments of this application.

The drawings are not drawn to scale.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application.

Unless otherwise defined, all technical and scientific terms used herein have the same meanings as what is normally understood by a person skilled in the technical field of this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. The embodiments of this application do not limit the type of the battery cell. The battery cell may be in various shapes such as a cylinder, flat body, or cuboid, without being limited in embodiments of this application. Depending on the form of packaging, the battery cell is typically classed into three types: cylindrical battery cell, prismatic battery cell, and pouch-type battery cell. The embodiments of this application do not limit the type of the battery cell.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolytic solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery cell as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. The separator may be made of a material such as polypropylene (PP) or polyethylene (PE). In addition, the electrode assembly may be of a jelly-roll type structure or a stacked type structure, without being limited herein.

A battery cell typically includes a housing, an electrode assembly, and an end cap. The electrode assembly is located in the housing. The end cap fits and covers the housing to provide an airtight space for the electrode assembly and an electrolytic solution. The battery cell generates electrical energy by shuttling metal ions (such as lithium ions) between a positive electrode plate and a negative electrode plate of the electrode assembly.

The battery cell typically includes two output electrodes of opposite polarities to output the electrical energy of the battery cell. Currently, the battery cell typically includes two electrode lead-out pieces. The two electrode lead-out pieces are electrically connected to two tabs of opposite polarities of the electrode assembly respectively, so as to serve as two output electrodes of the battery cell respectively. The inventor finds that, when the two tabs of opposite polarities of the electrode assembly are located at two ends of the body portion of the electrode assembly respectively, both tabs occupy a part of space inside the housing, thereby reducing the space available to the body portion of the electrode assembly inside the housing, and reducing the energy density of the battery cell.

The inventor tries disposing the two tabs of the electrode assembly at the same end of the electrode assembly to save the space inside the battery cell. In this way, the housing can provide more space for the body portion of the electrode assembly and increase the energy density of the battery cell.

To ensure a sufficient flow capacity, the flow area of the two tabs of the electrode assembly needs to sufficient. Due to a limited size of the electrode assembly, when the two tabs are led out from the same end of the electrode assembly, in order to ensure a sufficient flow area of each tab, the spacing between the two tabs is caused to be relatively small. When the battery cell is subjected to vibration and shock, the two tabs are prone to deformation and a lap-joint, resulting in a short circuit and safety hazards.

In view of this, an embodiment of this application provides a battery cell with a housing, an end cap, an electrode assembly, and an insulator. An opening is created on the housing. The end cap is configured to fit and cover the opening. The electrode assembly is accommodated in the housing and includes a body portion, a first tab, and a second tab. The first tab and the second tab are of opposite polarities and located on a same side of the body portion. A least a part of the insulator is disposed between the first tab and the second tab and configured to restrict the first tab from deforming toward the second tab. The insulator in this technical solution can restrict the first tab from deforming toward the second tab, and can isolate the first tab from the second tab, thereby reducing the risk of a short circuit caused by the contact between the first tab and the second tab, and improving the safety of the battery cell. The insulator can restrict the degree of deformation of the first tab, thereby reducing the risk of tearing the first tab caused by excessive deformation, and in turn, ensuring a sufficient flow capacity of the battery cell and improving safety.

The technical solutions described in this embodiment of this application are applicable to a battery and an electrical device that uses the battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

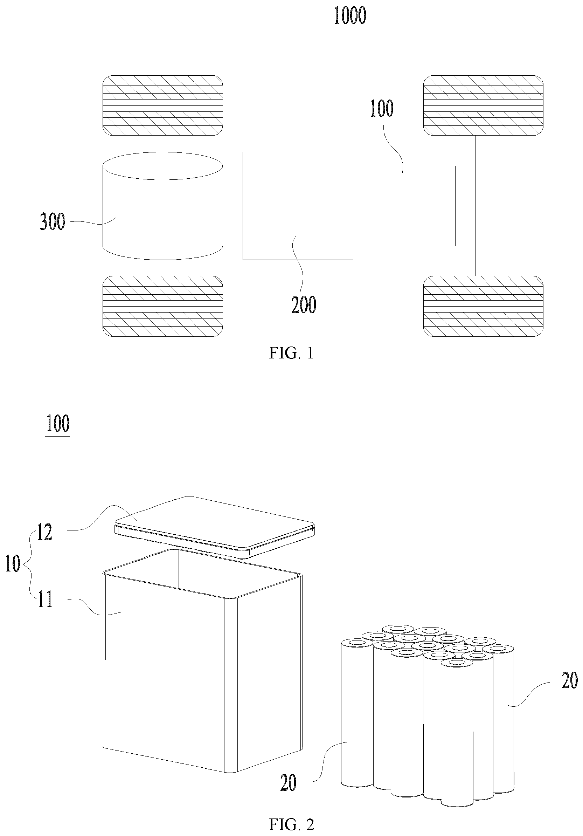

FIG. 1 is a schematic structural diagram of a vehicle according to some embodiments of this application. Referring to FIG. 1, a battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000.

The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

FIG. 2 is a schematic exploded view of a battery according to some embodiments of this application. Referring to FIG. 2, the battery 100 includes a box 10 and a battery cell 20. The box 10 is configured to accommodate the battery cell 20.

The box 10 is a component configured to accommodate the battery cell 20. The box 10 provides an accommodation space for the battery cell 20. The box 10 may be in various structures. In some embodiments, the box 10 may include a first part 11 and a second part 12. The first part 11 and the second part 12 fit and cover each other to define the accommodation space configured to accommodate the battery cell 20. The first part 11 and the second part 12 may be in various shapes, such as a cuboid or cylinder. The first part 11 may be a hollow structure opened up at one side. The second part 12 may also be a hollow structure opened up at one side. The open-up side of the second part 12 fits and covers the open-up side of the first part 11 to form the box 10 that provides the accommodation space. Alternatively, the first part 11 is a hollow structure opened up at one side, and the second part 12 is a plate-shaped structure. The second part 12 fits and covers the open-up side of the first part 11 to form the box 10 that provides the accommodation space. A junction between the first part 11 and the second part 12 may be sealed by a sealing element. The sealing element may be a sealing ring, a sealant, or the like.

There may be one or more battery cells 20 in the battery 100. If there are a plurality of battery cells 20, the plurality of battery cells 20 may be connected in series, parallel, or series-and-parallel pattern. The series-and-parallel pattern means a combination of series connection and parallel connection of the plurality of battery cells 20. The plurality of battery cells 20 are connected in series, parallel, or series-and-parallel pattern to form a battery module first, and then a plurality of battery modules are connected in series, parallel, or series-and-parallel pattern to form an entirety that is to be accommodated in the box 10. Alternatively, all battery cells 20 are directly connected in series, parallel, or series-and-parallel pattern, and then the entirety of all battery cells 20 is accommodated in the box 10.

In some embodiments, the battery 100 may further include a busbar component. The plurality of battery cells 20 may be electrically connected by the busbar component, so as to implement series, parallel, or series-and-parallel connection between the plurality of battery cells 20. The busbar component may be a metal conductor, such as copper, iron, aluminum, stainless steel, or an aluminum alloy.

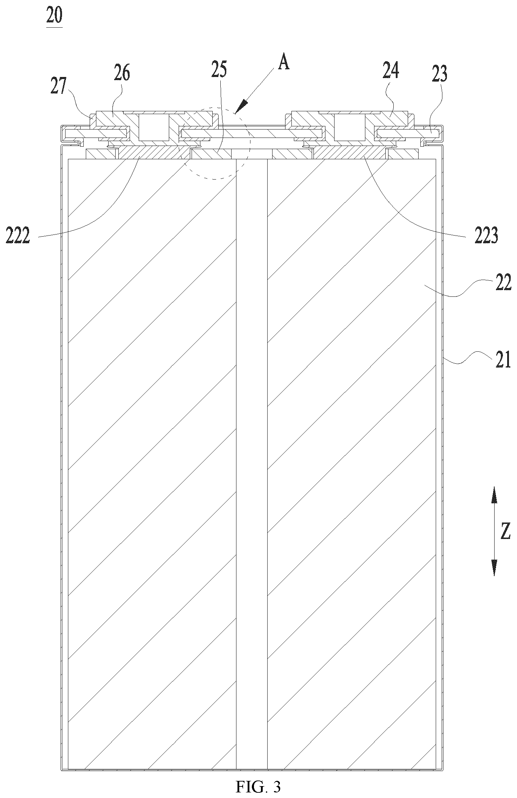

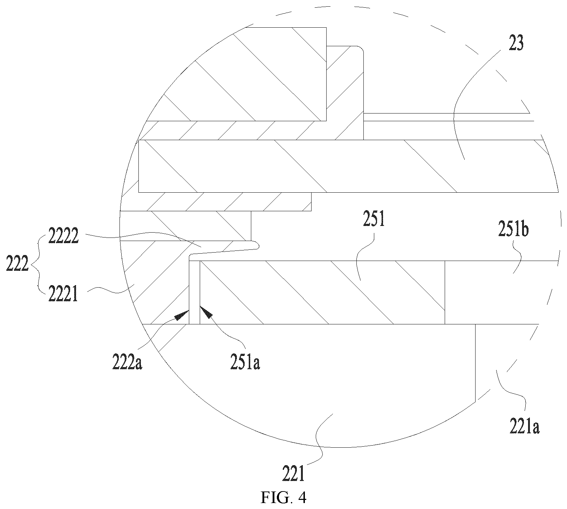

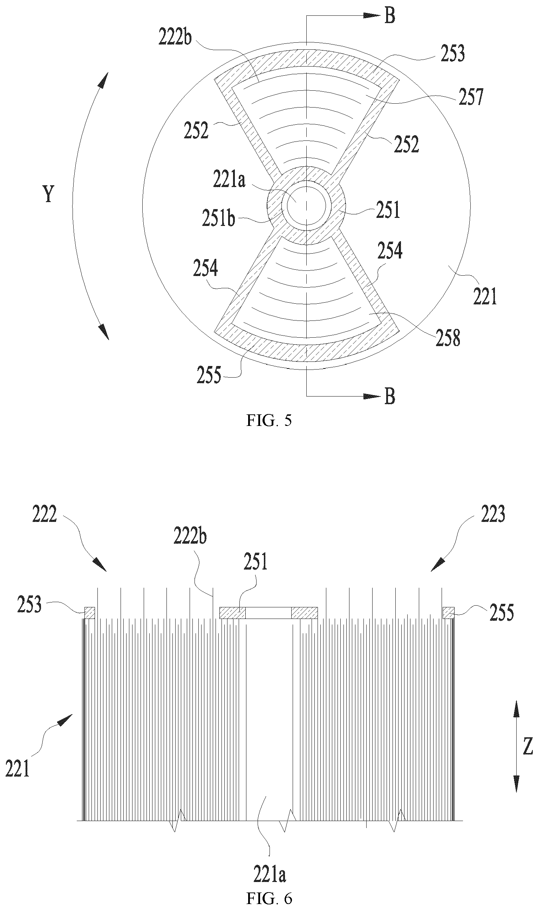

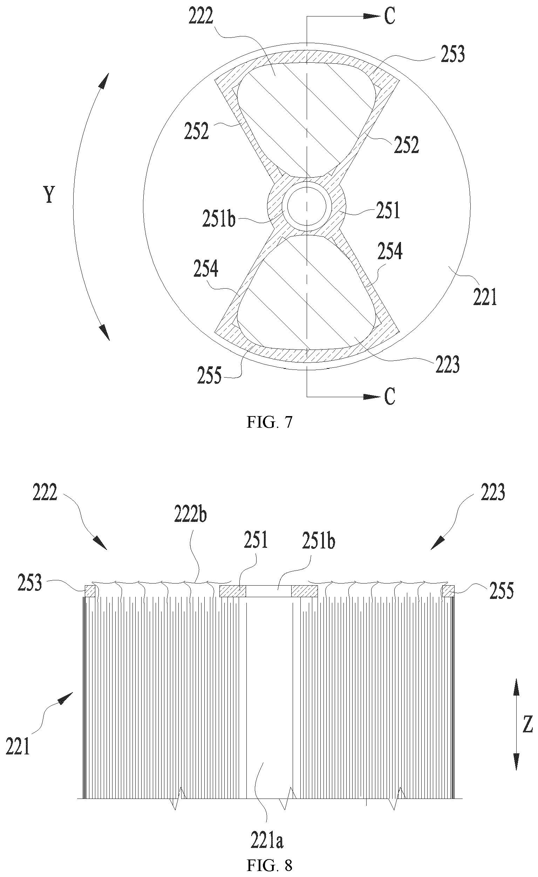

FIG. 3 is a schematic cross-sectional view of a battery cell according to some embodiments of this application; FIG. 4 is a schematic close-up view of a circled part A of the battery cell shown in FIG. 3; FIG. 5 is a schematic diagram of the electrode assembly and insulator shown in FIG. 3 during assembling; FIG. 6 is a partial cross-sectional view of FIG. 5 sectioned along a B-B line; FIG. 7 is another schematic diagram of the electrode assembly and insulator shown in FIG. 5 during assembling; and FIG. 8 is a partial cross-sectional view of FIG. 7 sectioned along a C-C line.

Referring to FIG. 3 to FIG. 8, an embodiment of this application provides a battery cell 20, including a housing 21, an end cap 23, an electrode assembly 22, and an insulator 25. An opening is created on the housing 21. The end cap 23 is configured to fit and cover the opening. The electrode assembly 22 is accommodated in the housing 21 and includes a body portion 221, a first tab 222, and a second tab 223. The first tab 222 and the second tab 223 are of opposite polarities and located on the same side of the body portion 221. A least a part of the insulator 25 is located between the first tab 222 and the second tab 223 and configured to restrict the first tab 222 from deforming toward the second tab 223.

The housing 21 is a component configured to accommodate the electrode assembly 22. The housing 21 may be a hollow structure opened at one end, or, the housing 21 may be a hollow structure opened at two ends. The housing 21 may be made of a variety of materials such as copper, iron, aluminum, steel, or an aluminum alloy. The housing 21 may be in various shapes such as a cylinder or cuboid. As an example, the housing 21 is cylindrical.

The electrode assembly 22 is a component that reacts electrochemically in the battery cell 20. Both the first tab 222 and the second tab 223 protrude from the body portion 221. The first tab 222 and the second tab 223 may be disposed on the same side of the body portion 221. Of the first tab 222 and the second tab 223, one is a positive tab, the other is a negative tab.

The electrode assembly 22 may assume a jelly-roll structure formed by winding a first electrode plate, a separator, and a second electrode plate, or a stacked structure formed by stacking the first electrode plate, the separator, and the second electrode plate. Of the first electrode plate and the second electrode plate, one is a positive electrode plate, and the other is a negative electrode plate.

The body portion 221 may include a part coated with an active material layer on the positive electrode plate, a part coated with an active material layer on the negative electrode plate, and a separator. An active material in the active material layer is configured to electrochemically react with an electrolytic solution and the like to actuate a charge-and-discharge cycles process.

The positive tab may be a part coated with no active material layer on the positive electrode plate. The negative tab may be a part coated with no active material layer on the negative electrode plate. The positive tab and the negative tab lead out the electrical energy generated by the body portion 221.

In an axial direction Z of the body portion 221, the first tab 222 and the second tab 223 protrude from the same end of the body portion 221. As an example, the first tab 222 and the second tab 223 protrude from the same end of the body portion 221, the end being oriented toward the end cap 23. In other words, the first tab 222 and the second tab 223 are located on the same side of the body portion 221, the side being oriented toward the end cap 23. As an example, the axial direction Z of the body portion 221 is parallel to the thickness direction of the end cap 23.

As an example, the first electrode plate, the separator, and the second electrode plate are wound around a winding axis to form a jelly-roll type electrode assembly 22. The winding axis is parallel to the axial direction Z of the body portion 221. The radial direction of the body portion 221 is perpendicular to the axial direction Z of the body portion 221 and passes through the winding axis.

As an example, the body portion 221 is cylindrical.

The first tab 222 and the second tab 223 may be spaced out along the radial direction of the body portion 221. For example, each of the first tab 222 and the second tab 223 is of an annular structure, and the first tab 222 is located on the outer circumferential side of the second tab 223, so that the first tab 222 and the second tab 223 are arranged as a large ring and a small ring respectively. Alternatively, the first tab 222 and the second tab 223 may be spaced out along the circumferential direction Y of the body portion 221. For example, the first tab 222 and the second tab 223 are strip-shaped, fan-shaped, or another structure.

The end cap 23 is a component that fits and covers the opening of the housing 21 to isolate the internal environment of the battery cell 20 from the external environment. The end cap 23 fits and covers the opening of the housing 21. The end cap 23 and the housing 21 jointly define a sealed space configured to accommodate the electrode assembly 22 and the electrolytic solution. The end cap 23 may be hermetically connected to the housing 21 through a sealing element. The shape of the end cap 23 may fit the shape of the housing 21. For example, the housing 21 is a cuboidal structure, and the end cap 23 is a rectangular plate-shaped structure that fits the housing 21. For another example, the housing 21 is a cylindrical structure, and the end cap 23 is a circular plate-shaped structure that fits the housing 21. The end cap 23 may be made of various materials. As an example, the end cap 23 may be made of a metal material such as copper, iron, aluminum, steel, or an aluminum alloy.

One or two end caps 23 may exist in the battery cell 20. If the housing 21 is a hollow structure opened at one end, one end cap 23 is disposed. If the housing 21 is a hollow structure opened at both ends, two end caps 23 are disposed. The two end caps 23 fit and cover the two openings of the housing 21 respectively.

The insulator 25 is a component that isolates the first tab 222 from the second tab 223. The first tab 222 is dielectrically isolated from the second tab 223 by the insulator 25. The insulator 25 may be made of various materials such as rubber and plastic. At least a part of the insulator 25 is located between the first tab 222 and the second tab 223. Understandably, the insulator 25 may be fully located between the first tab 222 and the second tab 223, or the insulator 25 may be partly located between the first tab 222 and the second tab 223.

In the radial direction of the body portion 221, the insulator 25 may directly abut against the first tab 222, or may be spaced apart from the first tab 222 by a specified distance.

This embodiment does not require the insulator 25 to completely restrict the deformation of the first tab 222, as long as the insulator 25 can limit the extent of the deformation of the first tab 222. For example, in a normal state, the insulator 25 and the first tab 222 may be spaced apart. When the battery cell 20 vibrates, the first tab 222 may deform and contact the insulator 25. In this case, the insulator 25 can restrict the first tab 222 from deforming excessively.

The insulator 25 may be configured to restrict the deformation of the first tab 222 alone, or restrict the deformation of both the first tab 222 and the second tab 223.

As an example, the insulator 25 is fixed in the battery cell 20. For example, the insulator 25 may be fixed to the body portion 221, or may be fixed to another structure of the battery cell 20.

In this embodiment of this application, the second tab 223 and the first tab 222 are located on the same side of the body portion 221, so that the tabs are led out from the same side of the body portion 221. In this way, the space inside the battery cell 20 is saved, and the housing 21 can provide more space for the body portion 221, thereby increasing the energy density of the battery cell 20. The insulator 25 can restrict the first tab 222 from deforming toward the second tab 223, and can isolate the first tab 222 from the second tab 223, thereby reducing the risk of a short circuit caused by the contact between the first tab 222 and the second tab 223, and improving the safety of the battery cell 20. The insulator 25 can restrict the degree of deformation of the first tab 222, thereby reducing the risk of tearing the first tab 222 caused by excessive deformation, and in turn, ensuring a sufficient flow capacity of the battery cell 20 and improving safety.

In some embodiments, the battery cell 20 includes a first electrode lead-out piece and a second electrode lead-out piece. The first electrode lead-out piece is configured to be electrically connected to the first tab 222, and the second electrode lead-out piece is configured to be electrically connected to the second tab 223. The first electrode lead-out piece and the second electrode lead-out piece are components of the battery cell 20 that are configured to be connected to an external component (such as a busbar component) to output electrical energy.

The first electrode lead-out piece and the second electrode lead-out piece are exposed conductive structures of the battery cell 20, and are dielectrically isolated from each other.

In this embodiment, the structures of the first electrode lead-out piece and the second electrode lead-out piece are not limited. Using the first electrode lead-out piece as an example, the first electrode lead-out piece may be the end cap 23, the housing 21, or another conductive structure disposed on the end cap 23.

In some embodiments, the battery cell 20 further includes a first electrode terminal 26 and a second electrode terminal 24 disposed on the end cap 23. The first tab 222 is configured to be electrically connected to the first electrode terminal 26. The second tab 223 is configured to be electrically connected to the second electrode terminal 24.

The first electrode terminal 26 and the second electrode terminal 24 serve as the first electrode lead-out piece and the second electrode lead-out piece respectively.

That the first electrode terminal 26 is electrically connected to the first tab 222 means that the first electrode terminal 26 and the first tab 222 are connected so that a charge can move from one to the other. The first electrode terminal 26 may be directly connected to the first tab 222 to implement electrical connection in between. For example, the first electrode terminal 26 abuts on or is welded to the first tab 222. Alternatively, the first electrode terminal 26 may be indirectly connected to the first tab 222 to implement electrical connection in between. For example, the first electrode terminal 26 is connected to the first tab 222 by a current collection component or conductive tape. That the second electrode terminal 24 is electrically connected to the second tab 223 means that the second electrode terminal 24 and the second tab 223 are connected so that a charge can move from one to the other. The second electrode terminal 24 may be directly connected to the second tab 223 to implement electrical connection in between. For example, the second electrode terminal 24 abuts on or is welded to the second tab 223. Alternatively, the second electrode terminal 24 may be indirectly connected to the second tab 223 to implement electrical connection in between. For example, the second electrode terminal 24 is connected to the second tab 223 by a current collection component or conductive tape.

As an example, both the first electrode terminal 26 and the second electrode terminal 24 protrude from the outer surface of the end cap 23 to facilitate electrical connection with an external component.

In some embodiments, in an axial direction Z of the body portion 221, a projection of the insulator 25 falls within a projection of the body portion 221.

Both the projection of the insulator 25 and the projection of the body portion 221 mean projections in the same plane perpendicular to the axis direction Z.

In this embodiment, the insulator 25 does not additionally occupy the space in the housing 21 in the radial direction of the body portion 221, thereby improving space efficiency.

In some embodiments, the insulator 25 is fixed to the body portion 221.

The insulator 25 may be fixed to the body portion 221 by bonding, snap-fastening, or other means.

In this embodiment, the insulator 25 is fixed to the body portion 221 to reduce the wobbling amplitude of the insulator 25 during vibration of the battery cell 20, reduce the risk of the insulator 25 crushing other components, and improve safety.

In some embodiments, the insulator 25 is bonded to the body portion 221. As an example, during assembling, glue may be applied onto a surface of the insulator 25, the surface being oriented toward the body portion 221. In this way, the insulator 25 is bonded to the body portion 221.

In some embodiments, in a direction perpendicular to the axial direction Z of the body portion 221, a minimum spacing between the first tab 222 and the second tab 223 is greater than or equal to 0.5 mm.

In this embodiment, in any direction perpendicular to the axial direction Z of the body portion 221, a minimum spacing between the first tab 222 and the second tab 223 is greater than or equal to 0.5 mm.

This embodiment ensures a sufficient spacing between the first tab 222 and the second tab 223, so as to reduce the risk of a lap-joint between the first tab 222 and the second tab 223 during vibration of the battery cell 20, avoid a short circuit, and improve safety.

In some embodiments, an end face of the body portion 221 toward the end cap 23 is formed of a first region and a second region. The first tab 222 and the second tab 223 are led out from the first region. An area of the second region is S₁, an area of a part covered by the insulator 25 in the second region is S₂, and a value of the S₂/S₁ ratio is 0.5 to 0.95.

The first region is a region corresponding to both the first tab 222 and the second tab 223 on an end face of the body portion 221. In other words, the projection of the first tab 222 and the second tab 223 on the end face of the body portion 221 along the axial direction Z exactly coincides with the first region. The remaining region other than the first region on the end face of the body portion 221 is the second region.

An area of an orthographic projection of the insulator 25 on the second region along the axial direction Z is S₂.

In some embodiments, the first tab 222 includes a base portion 2221 and a protruding portion 2222. The base portion 2221 is led out from the body portion 221. The protruding portion 2222 protrudes from a first outer peripheral surface 222a of the base portion 2221 in a radial direction of the body portion 221.

The first outer peripheral surface 222a is roughly an annular surface. A surface of the base portion 2221, oriented toward the end cap 23, is an end face of the base portion 2221. The end face of the base portion 2221 is connected to the first outer peripheral surface 222a.

As an example, the base portion 2221 assumes a columnar structure roughly.

In this embodiment, the number and shape of the protruding portions 2222 are not limited. In some examples, the protruding portion 2222 may be a continuous structure that extends in the circumferential direction of the base portion 2221, and may be a closed ring, or an unclosed semi-ring, or the like. In some other examples, there may be a plurality of protruding portions 2222 spaced out along the circumferential direction Y of the base portion 2221.

In this embodiment, the protruding portion 2222 is provided to increase the flow area in a local region of the first tab 222 and improve the flow capacity.

As an example, the protruding portion 2222 protrudes from an end of the first outer peripheral surface 222a, the end being close to the end cap 23. The protruding portion 2222 may be configured to abut against another conductive structure (such as the first electrode terminal 26) to improve the flow capacity.

In some embodiments, the protruding portion 2222 is configured to be formed by squeezing an end of the first tab 222, the end being oriented toward the end cap 23. The insulator 25 is configured to be mounted onto the body portion 221 before the protruding portion 2222 is formed.

As shown in FIG. 5 and FIG. 6, the first tab 222 includes a plurality of tab layers 222b. The plurality of tab layers 222b are stacked along the radial direction of the body portion 221. After the electrode assembly 22 is formed, the tab layers 222b extend roughly along the axial direction Z of the body portion 221. A clearance between adjacent tab layers 222b is relatively large. The inventor finds that, if a plurality of tab layers 222b are directly connected to a conductive structure (such as the first electrode terminal 26), then the connection area between the conductive structure and each tab layer 222b is relatively small, resulting in a deficiency of the connection strength and flow area between the conductive structure and the tab layer 222b. Consequently, during vibration of the battery cell 20, the connection between the conductive structure and the tab layer 222b is prone to failure. Especially, when the conductive structure is connected to the tab layer 222b by laser welding, a laser beam may pass through the clearance between the tab layers 222b and burn the body portion 221.

In view of this, as shown in FIG. 7 and FIG. 8, the inventor squeezes the ends of the plurality of tab layers 222b, the ends being oriented toward the end cap 23. In this way, the ends of the plurality of tab layers 222b are bent and deformed and abut against each other, so as to flatten the first tab 222 and form a compact region. The compact region is used for being connected to the conductive structure, thereby ensuring relatively high connection strength and a relatively large flow area between the conductive structure and the first tab 222. The compact region blocks out the clearance between the tab layers 222b to prevent the laser beam from passing through the clearance between the tab layers 222b.

After the first tab 222 is squeezed, the end of the first tab 222 protrudes peripherally in a direction depending on the direction of the squeezing force, so as to form the protruding portion 2222.

When the first tab 222 is squeezed to form the protruding portion 2222, the entire first tab 222 is stressed and prone to deform. In this embodiment, the insulator 25 is mounted onto the body portion 221 before the first tab 222 is squeezed. In this way, the insulator 25 can restrict the first tab 222 from deforming toward the second tab 223, thereby reducing the risk of a short circuit caused by the contact between the first tab 222 and the second tab 223 and improving the safety of the battery cell 20. The protruding portion 2222 increases the dimension of the first tab 222 along the radial direction of the body portion 221. In this embodiment, the insulator 25 is mounted onto the body portion 221 beforehand, thereby preventing the protruding portion 2222 from interfering with the insulator 25 during the mounting.

In some embodiments, in the axial direction Z of the body portion 221, the end away from the body portion 221 among the ends of the first tab 222 goes beyond the insulator 25. In the first tab 222, the part that goes beyond the insulator 25 is deformed to form the protruding portion 2222.

In some embodiments, in the axial direction Z of the body portion 221, at least a part of the protruding portion 2222 is located on a side of the insulator 25, the side being away from the body portion 221.

In the axial direction Z of the body portion 221, just a part of the protruding portion 2222 is located on a side of the insulator 25, the side being away from the body portion 221; or, the entire protruding portion is located on a side of the insulator 25, the side being away from the body portion 221.

In this embodiment, the insulator 25 can isolate at least a part of the protruding portion 2222 from the body portion 221, thereby reducing the risk of insertion of the protruding portion 2222 into the body portion 221 during vibration of the battery cell 20, and improving safety. In addition, the protruding portion 2222 can restrict the insulator 25 in the axial direction Z, and reduce the wobbling amplitude of the insulator 25 during vibration of the battery cell 20.

In some embodiments, the protruding portion 2222 and the body portion 221 clamp the insulator 25 from both sides.

As an example, the protruding portion 2222 may fit closely onto a surface of the insulator 25, the surface being away from the body portion 221.

In this embodiment, the protruding portion 2222 and the body portion 221 fix the insulator 25, thereby reducing the wobbling amplitude of the insulator 25 during vibration of the battery cell 20, and improving the stability of the insulator 25.

In some embodiments, the insulator 25 includes a first insulating portion 251. At least a part of the first insulating portion 251 is disposed between the base portion 2221 and the second tab 223 to restrict the base portion 2221 from deforming toward the second tab 223. In the axial direction Z of the body portion 221, at least a part of the first insulating portion 251 is located between the protruding portion 2222 and the body portion 221 to restrict the protruding portion 2222 from deforming toward the body portion 221.

At least a part of the protruding portion 2222 protrudes from the first outer peripheral surface 222a toward the second tab 223.

The first insulating portion 251 may be entirely located between the base portion 2221 and the second tab 223, or just partly located between the base portion 2221 and the second tab 223.

In the axial direction Z of the body portion 221, the end away from the body portion 221 among the ends of the base portion 2221 goes beyond the first insulating portion 251.

In this embodiment, the first insulating portion 251 can restrict the deformation of both the base portion 2221 and the protruding portion 2222 to reduce the risk of a lap-joint between the base portion 2221 and the second tab 223 as well as the risk of insertion of the protruding portion 2222 into the body portion 221, thereby improving safety.

In some embodiments, the second tab 223 also includes a base portion and a protruding portion. At least a part of the first insulating portion 251 is located between the base portion 2221 of the first tab 222 and the base portion of the second tab 223.

In some embodiments, the first insulating portion 251 includes a second outer peripheral surface 251a parallel to the axial direction Z of the body portion 221. In the radial direction of the body portion 221, a minimum distance between the second outer peripheral surface 251a and the base portion 2221 is less than or equal to 5 mm.

The second outer peripheral surface 251a is an annular surface. For example, the second outer peripheral surface 251a is a cylindrical surface.

During assembling and use of the battery cell 20, for example, in a process of pressing the first tab 222 to form a compact region, the base portion 2221 is prone to deform when being squeezed. When excessively deformed, the base portion 2221 may be inserted into the body portion 221, thereby posing a short-circuit risk. In this embodiment, the spacing between the second outer peripheral surface 251a of the first insulating portion 251 and the base portion 2221 is relatively small. In this way, the first insulating portion 251 can effectively support the base portion 2221, reduce the degree of deformation of the base portion 2221, reduce the risk of insertion of the base portion 2221 into the body portion 221, and improve safety.

In some embodiments, in the radial direction of the body portion 221, a spacing L₁ between the first insulating portion 251 and the base portion 2221 is 0.1 mm to 5 mm. For example, L₁ is 1 mm to 3 mm.

In some embodiments, the second outer peripheral surface 251a abuts against the first outer peripheral surface 222a of the base portion 2221.

In this embodiment, the first insulating portion 251 abuts against the base portion 2221 to effectively support the base portion 2221, reduce the degree of deformation of the base portion 2221, reduce the risk of insertion of the base portion 2221 into the body portion 221, and improve safety.

In some embodiments, the first tab 222 and the second tab 223 are spaced out in a circumferential direction Y of the body portion 221.

As an example, the first tab 222 and the second tab 223 are located on two sides of a virtual plane respectively, and the winding axis is located in the virtual plane.

In this embodiment, the first tab 222 and the second tab 223 can have a larger dimension in the radial direction of the body portion 221, thereby improving the flow capacity of the first tab 222 and the second tab 223.

Specifically, a plurality of tab layers 222b of the first tab 222 are stacked along the radial direction of the body portion 221. The larger the dimension of the first tab 222 along the radial direction, the larger the number of tab layers 222b of the first tab 222. Each tab layer 222b can lead out the current on the first electrode plate. Therefore, this embodiment can increase the number of tab layers 222b, and in turn, increase the conductive paths on the first electrode plate, reduce the resistance, improve the uniformity of the current density, and improve the flow capacity and charging efficiency of the battery cell 20.

In some embodiments, the first insulating portion 251 includes a first through-hole 251b. The body portion 221 assumes a jelly-roll structure and includes a second through-hole 221a. The first through-hole 251b and the second through-hole 221a are disposed opposite to each other along the axial direction Z of the body portion 221.

In this embodiment, the first through-hole 251b runs through the first insulating portion 251 along the axial direction Z, and the second through-hole 221a runs through the body portion 221 along the axial direction Z. The first through-hole 251b and the second through-hole 221a at least partly overlap in the axial direction Z. As an example, the first through-hole 251b and the second through-hole 221a are coaxially arranged.

In this embodiment, the first through-hole 251b and the second through-hole 221a can be used as a positioning reference during assembling of the electrode assembly 22 and the insulator 25, thereby simplifying the assembling process.

The first through-hole 251b and the second through-hole 221a can also form channels through which the electrolytic solution can flow, thereby improving the effect of infiltrating the electrode assembly 22.

In some embodiments, the first insulating portion 251 includes a first through-hole 251b, and the first through-hole 251b is located between the first tab 222 and the second tab 223. In the radial direction of the body portion 221, the end away from the base portion 2221 among the ends of the protruding portion 2222 does not go beyond a hole wall of the first through-hole 251b.

The end away from the base portion 2221 among the ends of the protruding portion 2222 is a free end of the protruding portion 2222.

In this embodiment, the end away from the base portion 2221 among the ends of the protruding portion 2222 does not go beyond the hole wall of the first through-hole 251b, thereby preventing the protruding portion 2222 from extending into the first through-hole 251b, reducing the risk of insertion of the protruding portion 2222 into the body portion 221 through the first through-hole 251b, and improving safety.

In this embodiment, the extent by which the protruding portion 2222 protrudes from the base portion 2221 is reduced, thereby reducing the risk of a lap-joint between the protruding portion 2222 and the second tab 223.

In some embodiments, the insulator 25 further includes second insulating portions 252. The second insulating portions 252 are connected to the first insulating portion 251 and disposed on a side of the base portion 2221 along the circumferential direction of the body portion 221 to restrict the base portion 2221 from deforming along the circumferential direction Y of the body portion 221.

The second insulating portion 252 may be one in number, and may be disposed on a side of the base portion 2221 along the circumferential direction Y. Alternatively, the second insulating portion 252 may be two in number, and the two second insulating portions 252 are disposed on the two sides of the base portion 2221 along the circumferential direction Y of the body portion 221 respectively.

In this embodiment, the insulator 25 can restrict the base portion 2221 from deforming along the circumferential direction Y of the body portion 221, thereby further reducing the risk of tearing caused by excessive deformation of the base portion 2221, and in turn, ensuring a sufficient flow capacity of the battery cell 20 and improving safety.

In some embodiments, in the axial direction Z of the body portion 221, at least a part of the second insulating portion 252 is located between the protruding portion 2222 and the body portion 221 to restrict the protruding portion 2222 from deforming toward the body portion 221.

At least a part of the protruding portion 2222 protrudes from the first outer peripheral surface 222a along the circumferential direction Y of the body portion 221.

In this embodiment, the second insulating portion 252 can restrict the deformation of the protruding portion 2222 to reduce the risk of insertion of the protruding portion 2222 into the body portion 221, thereby improving safety.

In some embodiments, two second insulating portions 252 are disposed. The two second insulating portions 252 are located on two sides of the base portion 2221 respectively along the circumferential direction Y of the body portion 221.

In this embodiment, the two second insulating portions 252 can restrict the base portion 2221 from two sides of the circumferential direction Y, so as to reshape the base portion 2221 in the circumferential direction Y, thereby further reducing the risk of tearing caused by excessive deformation of the base portion 2221, and in turn, ensuring a sufficient flow capacity of the battery cell 20 and improving safety.

In some embodiments, the insulator 25 further includes a third insulating portion 253. The third insulating portion 253 is connected to an end of the second insulating portion 252, the end being away from the first insulating portion 251. The third insulating portion 253 is located on a side of the base portion 2221, the side being away from the first insulating portion 251, so as to restrict the base portion 2221 from deforming away from the first insulating portion 251.

In this embodiment, the third insulating portion 253 can restrict the base portion 2221 from deforming away from the first insulating portion 251, thereby further reducing the risk of tearing caused by excessive deformation of the base portion 2221, and in turn, ensuring a sufficient flow capacity of the battery cell 20 and improving safety.

In some embodiments, in the axial direction Z of the body portion 221, at least a part of the third insulating portion 253 is located between the protruding portion 2222 and the body portion 221 to restrict the protruding portion 2222 from deforming toward the body portion 221.

In the radial direction of the body portion 221, at least a part of the protruding portion 2222 protrudes away from the first insulating portion 251.

In this embodiment, the third insulating portion 253 can restrict the deformation of the protruding portion 2222 to reduce the risk of insertion of the protruding portion 2222 into the body portion 221, thereby improving safety.

In some embodiments, the first insulating portion 251, the two second insulating portions 252, and the third insulating portion 253 close in to form a third through-hole 257, and the first tab 222 passes through the third through-hole 257.

In this embodiment, the hole wall of the third through-hole 257 can restrict the first tab 222 from all sides to reshape the first tab 222, thereby reducing the degree of deformation of the first tab 222 under pressure, and reducing the risk of tearing the first tab 222.

In a process of squeezing the first tab 222 to form the compact region and the protruding portion 2222, it is difficult to precisely control the protruding direction of the protruding portion 2222. In this embodiment, the first insulating portion 251, the two second insulating portions 252, and the third insulating portion 253 is of an annular structure. In this way, the insulator 25 can support the protruding portion 2222 regardless of the protruding direction of the protruding portion 2222, thereby preventing the protruding portion 2222 from being inserted into the body portion 221, reducing the short-circuit risk, and improving safety.

In some embodiments, the insulator 25 is further configured to restrict the second tab 223 from deforming toward the first tab 222.

In this embodiment, the insulator 25 can restrict the deformation of both the first tab 222 and the second tab 223, thereby reducing the risk of tearing the first tab 222 or the second tab 223 caused by excessive deformation and the risk of a short circuit caused by the contact between the first tab 222 and the second tab 223, and in turn, further improving the safety of the battery cell 20.

According to the invention the insulator 25 includes a third through-hole 257 (in the claim defined as 'first' through-hole 257) and a fourth-through hole 258 (in the claim defined as 'second' through-hole 258). The first tab 222 passes through the third through-hole 257. A hole wall of the third through-hole 257 restricts deformation of the first tab 222 from outside. The second tab 223 passes through the fourth through-hole 258. A hole wall of the fourth through-hole 258 restricts deformation of the second tab 223 from outside.

In this embodiment, the hole wall of the third through-hole 257 and the hole wall of the fourth through-hole 258 reshape the first tab 222 and the second tab 223 respectively, thereby reducing the degree of deformation of the first tab 222 and the second tab 223 under pressure, and reducing the risk of tearing the first tab 222 and the second tab 223.

According to the invention, the insulator 25 includes a first insulating portion 251, two second insulating portions 252, a third insulating portion 253, two fourth insulating portions 254, and a fifth insulating portion 255. The two second insulating portions 252 and the two fourth insulating portions 254 are arranged outside the first insulating portion 251 successively along the circumferential direction Y of the body portion 221. Each of the second insulating portions 252 is connected to the first insulating portion 251 and the third insulating portion 253. The first insulating portion 251, the two second insulating portions 252, and the third insulating portion 253 close in to form the third through-hole 257. Each of the fourth insulating portions 254 is connected to the first insulating portion 251 and the fifth insulating portion 255. The first insulating portion 251, the two fourth insulating portions 254, and the fifth insulating portion 255 close in to form the fourth through-hole 258.

In some embodiments, the insulator 25 is a structure formed in one piece. As an example, the first insulating portion 251, the two second insulating portions 252, the third insulating portion 253, the two fourth insulating portions 254, and the fifth insulating portion 255 are formed in one piece, for example, by injection molding.

In this embodiment, the insulator 25 is highly integrated and easy to manufacture and mount

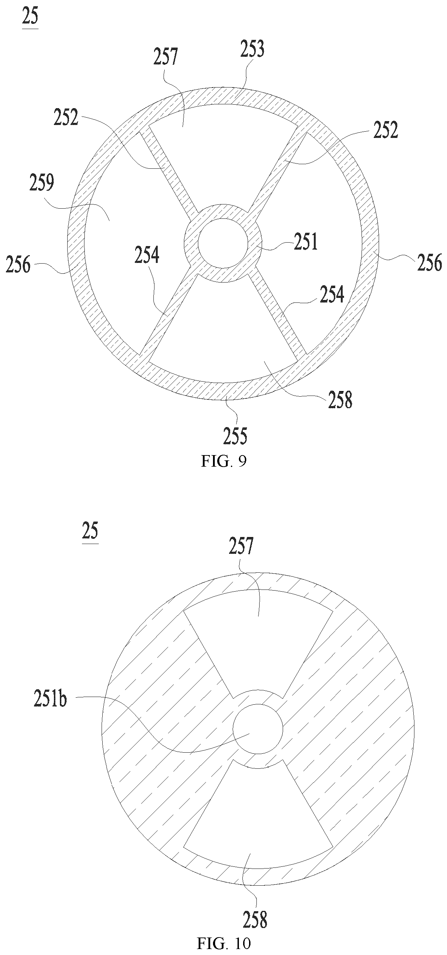

FIG. 9 is a schematic structural diagram of an insulator of a battery cell according to some other embodiments of this application.

As shown in FIG. 9, in some embodiments, the insulator 25 further includes two reinforcing portions 256. One reinforcing portion 256, the third insulating portion 253, the other reinforcing portion 256, and the fifth insulating portion 255 are connected successively along the circumferential direction of the body portion to form a ring structure.

In this embodiment, the reinforcing portions 256 can increase the overall strength of the insulator 25, so as to reduce the deformation of the insulator 25 squeezed by the first tab, the second tab, and other forces, and in turn, thereby effectively supporting the first tab and the second tab.

In some embodiments, the reinforcing portions 256, the second insulating portion 252, the fourth insulating portion 254, and the first insulating portion 251 close in to form a fifth through-hole 259. The fifth through-hole 259 provides a channel for the electrolytic solution so that the electrolytic solution can infiltrate the body portion.

FIG. 10 is a schematic structural diagram of an insulator of a battery cell according to still other embodiments of this application.

In some embodiments, the insulator 25 assumes a flat plate structure. As an example, the insulator 25 is solid except the first through-hole 251b, the third through-hole 257, and the fourth through-hole 258.

In some embodiments, the insulator 25 assumes a circular plate structure.

In some embodiments, an end face of the body portion toward the end cap is formed of a first region and a second region. The first tab and the second tab are led out from the first region. An area of the second region is S₁, an area of a part covered by the insulator 25 in the second region is S₂, and a value of an S₂/S₁ ratio is 0.5 to 0.95.

In this embodiment, the insulator 25 covers a relatively large area of the body portion, so that the insulator 25 can protect the body portion, reduce the risk of dropping of particles into the body portion, and improve safety, where the particles are generated during formation of the battery cell.

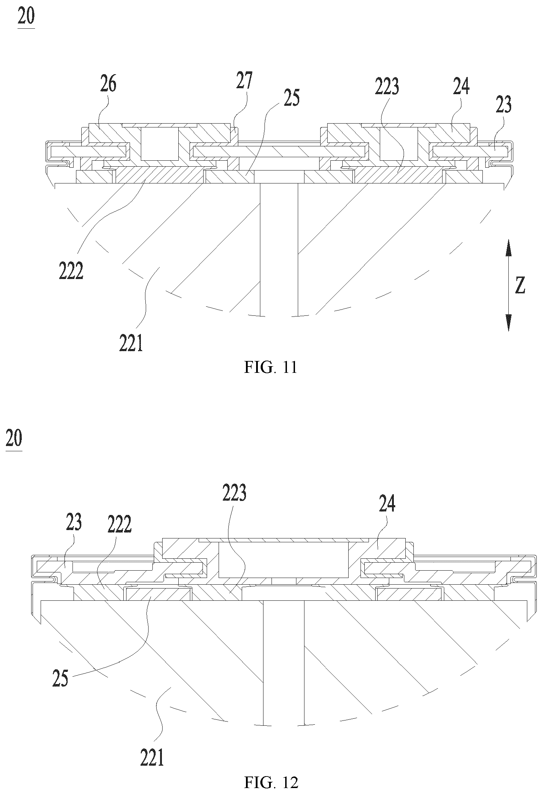

FIG. 11 is a partial cross-sectional view of a battery cell according to another embodiment of this application.

As shown in FIG. 11, the insulator 25 is clamped between the end cap 23 and the body portion 221.

The end cap 23 may directly press against the insulator 25 or indirectly press against the insulator 25 through another component, so as to fit with the body portion 221 and clamp the insulator 25.

In this embodiment, the end cap 23 and the body portion 221 clamp the insulator 25 to fix the insulator 25. In addition, the end cap 23 can limit movement of the body portion 221 through the insulator 25, so as to reduce the movement space of the body portion 221 in the housing 21, and in turn, reduce the risk of tearing the first tab 222 and the second tab 223 during vibration of the battery cell 20.

In some embodiments, the battery cell 20 further includes an insulating sealing element 27. At least a part of the insulating sealing element 27 is disposed between the first electrode terminal 26 and the end cap 23 to dielectrically isolate the first electrode terminal 26 from the end cap 23 and implementing airtightness. As an example, the end cap 23 presses against the insulator 25 through the insulating sealing element 27.

FIG. 12 is a partial cross-sectional view of a battery cell according to still other embodiments of this application.

As shown in FIG. 12, in some embodiments, each of the first tab 222 and the second tab 223 is of an annular structure, and the first tab 222 surrounds the second tab 223. The insulator 25 is of an annular structure and is located between the first tab 222 and the second tab 223.

As an example, the insulator 25 includes an annular first insulating portion alone.

In some embodiments, the battery cell 20 further includes a second electrode terminal 24 disposed on the end cap 23. The first tab 222 is configured to be electrically connected to the end cap 23. The second tab 223 is configured to be electrically connected to the second electrode terminal 24.

In this embodiment, the end cap 23 and the second electrode terminal 24 serve as the first electrode lead-out piece and the second electrode lead-out piece respectively. In this way, the structure of the battery cell 20 is simplified by saving a conventional electrode terminal.

In a battery cell provided in still some other embodiments of this application, the first tab and the second tab may be of the same polarity. A plurality of tabs of the same polarity disposed at the same end of the electrode assembly can improve the flow capacity. The insulator can restrict the degree of deformation of the first tab, thereby reducing the risk of tearing the first tab caused by excessive deformation, and in turn, ensuring a sufficient flow capacity of the battery cell and improving safety.

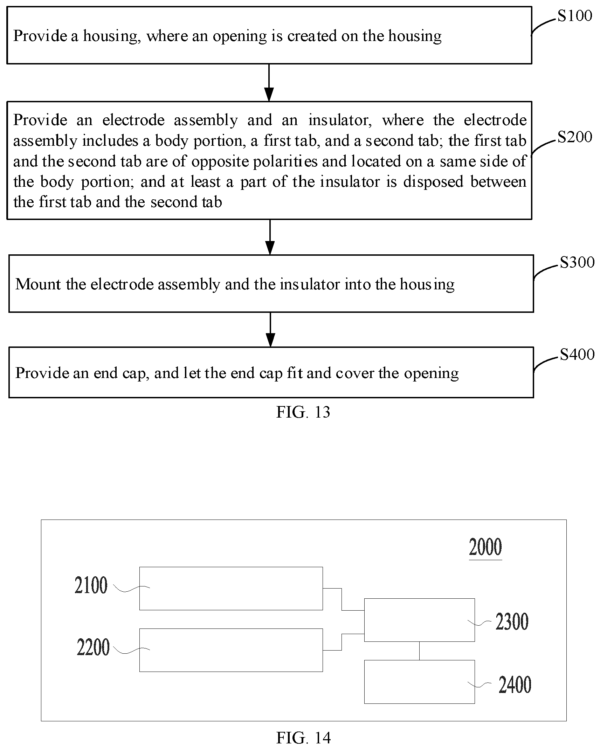

FIG. 13 is a schematic flowchart of a battery cell manufacturing method according to some embodiments of this application.

As shown in FIG. 13, an embodiment of this application provides a battery cell manufacturing method. The method includes the following steps:
S100. Providing a housing, where an opening is created on the housing;
S200. Providing an electrode assembly and an insulator, where the electrode assembly includes a body portion, a first tab, and a second tab; the first tab and the second tab are of opposite polarities and located on a same side of the body portion; and at least a part of the insulator is disposed between the first tab and the second tab;
S300. Mounting the electrode assembly and the insulator into the housing; and
S400. Providing an end cap, and letting the end cap fit and cover the opening.

The insulator is configured to restrict the first tab from deforming toward the second tab.

It is hereby noted that, for the related structure of the battery cell manufactured by the foregoing battery cell manufacturing method, reference may be made to the descriptions of the battery cell provided in each of the foregoing embodiments.

In manufacturing a battery cell based on the foregoing battery cell manufacturing method, the foregoing steps are not necessarily performed in the order described above. In other words, the steps may be performed in the order mentioned in an embodiment described above, or the steps may be performed in order different from the order mentioned in the embodiment, or several steps may be performed concurrently. For example, step S100 and step S200 are not necessarily performed sequentially, but may be performed simultaneously.

FIG. 14 is a schematic block diagram of battery cell manufacturing equipment according to some embodiments of this application.

As shown in FIG. 14, an embodiment of this application provides a piece of battery cell manufacturing equipment 2000, including: a first providing apparatus 2100, a second providing apparatus 2200, a first assembling apparatus 2300, and a second assembling apparatus 2400. The first providing apparatus 2100 is configured to provide a housing, where an opening is created on the housing. The second providing apparatus 2200 is configured to provide an electrode assembly and an insulator. The electrode assembly includes a body portion, a first tab, and a second tab. The first tab and the second tab are of opposite polarities and located on a same side of the body portion. At least a part of the insulator is disposed between the first tab and the second tab. The first assembling apparatus 2300 is configured to mount the electrode assembly and the insulator into the housing. The second assembling apparatus 2400 is configured to provide an end cap, and let the end cap fit and cover the opening. The insulator is configured to restrict the first tab from deforming toward the second tab.

For the related structure of the battery cell manufactured by the foregoing manufacturing equipment, reference may be made to the description of the battery cell provided in each embodiment described above.

It is hereby noted that to the extent that no conflict occurs, the embodiments of this application and the features in the embodiments may be combined with each other. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions.

## Claims

1. A battery cell (20), comprising:
a housing (21), on which an opening is created;
an end cap (23), fitted over and covering the opening;
an electrode assembly (22), accommodated in the housing (21), wherein the electrode assembly (22) comprises a body portion (221), a first tab (222) and a second tab (223), the first tab (222) and the second tab (223) being of opposite polarities and both located on the same side of the body portion (221); and
an insulator (25), wherein at least a part of the insulator (25) is disposed between the first tab (222) and the second tab (223),
**characterized in that**:
the insulator (25) includes a first insulating portion (251), two second insulating portions (252), a third insulating portion (253), two fourth insulating portions (254), and a fifth insulating portion (255), wherein the two second insulating portions (252) and the two fourth insulating portions (254) are arranged outside the first insulating portion (251) successively along the circumferential direction (Y) of the body portion (221),
wherein each of the second insulating portions (252) is connected to the first insulating portion (251) and the third insulating portion (253), wherein the first insulating portion (251), the two second insulating portions (252), and the third insulating portion (253) close in to form a first through-hole (257),
wherein each of the fourth insulating portions (254) is connected to the first insulating portion (251) and the fifth insulating portion (255), wherein the first insulating portion (251), the two fourth insulating portions (254), and the fifth insulating portion (255) close in to form a second through-hole (258),¹ Basis: paragraph 209 of the description.
wherein the first tab (222) passes through the first through-hole (257) and a hole wall of the first through-hole (257) restricts deformation of the first tab (222) from outside,
wherein the second tab (223) passes through the second through-hole (258) and a hole wall of the second through-hole (258) restricts deformation of the second tab (223) from outside² Basis: paragraph 207 of the description.

2. The battery cell (20) according to claim 1, wherein the first tab (222) comprises a base portion (2221) and a protruding portion (2222), the base portion (2221) is led out from the body portion (221), and the protruding portion (2222) protrudes from a first outer peripheral surface (222a) of the base portion (2221) in a radial direction of the body portion (221).

3. The battery cell (20) according to claim 2,wherein in an axial direction (Z) of the body portion (221), at least a part of the protruding portion (2222) is located on a side of the insulator (25), the side being away from the body portion (221), wherein the protruding portion (2222) and the body portion (221) preferably clamp the insulator (25) from both sides.

4. The battery cell (20) according to claim 3, wherein the insulator (25) comprises a first insulating portion (251), wherein:
at least a part of the first insulating portion (251) is disposed between the base portion (2221) and the second tab (223) to restrict the base portion (2221) from deforming toward the second tab (223); and
in the axial direction (Z) of the body portion (221), at least a part of the first insulating portion (251) is located between the protruding portion (2222) and the body portion (221) to restrict the protruding portion (2222) from deforming toward the body portion (221).

5. The battery cell according to claim 4, wherein the first tab (222) and the second tab (223) are spaced out in a circumferential direction (Y) of the body portion (221),
wherein the first insulating portion (251) comprises a third through-hole (251b), the body portion (221) assumes a jelly-roll structure and comprises a fourth through-hole (221a), and the third through-hole (251b) and the fourth through-hole (221a) are disposed opposite to each other along the axial direction (Z) of the body portion (221).

6. The battery cell (20) according to claim 5, wherein:
the second insulating portion (252) is disposed on a side of the base portion (2221) along the circumferential direction (Y) of the body portion (221) to restrict the base portion (2221) from deforming along the circumferential direction (Y) of the body portion (221); and preferably,
in the axial direction (Z) of the body portion (221), at least a part of the second insulating portion (252) is located between the protruding portion (2222) and the body portion (221) to restrict the protruding portion (2222) from deforming toward the body portion (221).

7. The battery cell (20) according to claim 6, wherein:
the third insulating portion (253) is connected to an end of the second insulating portion (252), the end being away from the first insulating portion (251); and
the third insulating portion (253) is located on a side of the base portion (2221), the side being away from the first insulating portion (251), so as to restrict the base portion (2221) from deforming away from the first insulating portion (251),
wherein preferably,
in the axial direction (Z) of the body portion (221), at least a part of the third insulating portion (253) is located between the protruding portion (2222) and the body portion (221) to restrict the protruding portion (2222) from deforming toward the body portion (221).

8. The battery cell (20) according to claim 1, wherein the insulator (25) further comprises two reinforcing portions;
wherein one of the two reinforcing portions, the third insulating portion (253), the other one of the two reinforcing portions, and the fifth insulating portion (255) are connected successively along the circumferential direction (Y) of the body portion (221) to form a ring structure,
wherein preferably, an end face of the body portion (221) toward the end cap (23) is formed of a first region and a second region, the first tab (222) and the second tab (223) are led out from the first region, an area of the second region is S₁, an area of a part covered by the insulator (25) in the second region is S₂, and a value of an S₂/S₁ ratio is 0.5 to 0.95.

9. The battery cell (20) according to any one of claims 1 to 4, wherein each of the first tab (222) and the second tab (223) is of an annular structure, and the first tab (222) surrounds the second tab (223); and
the insulator (25) is of an annular structure and is located between the first tab (222) and the second tab (223).

10. The battery cell (20) according to any one of claims 1 to 9, wherein in the axial direction (Z) of the body portion (221), a projection of the insulator (25) falls within a projection of the body portion (221); or
the insulator (25) is fixed to the body portion (221), wherein preferably, the insulator (25) is bonded to the body portion (221), and/or the insulator (25) is clamped between the end cap (23) and the body portion (221).

11. The battery cell (20) according to any one of claims 1 to 10, wherein in a direction perpendicular to the axial direction (Z) of the body portion (221), a minimum spacing between the first tab (222) and the second tab (223) is greater than or equal to 0.5 mm; and/or
wherein the insulator (25) is a structure formed in one piece; and/or
wherein the battery cell (20) further comprises a first electrode terminal (26) and a second electrode terminal (24) disposed on the end cap (23), the first tab (222) is configured to be electrically connected to the first electrode terminal (26), and the second tab (223) is configured to be electrically connected to the second electrode terminal (24); or
the battery cell (20) further comprises a second electrode terminal (24) disposed on the end cap (23), the first tab (222) is configured to be electrically connected to the end cap (23), and the second tab (223) is configured to be electrically connected to the second electrode terminal (24).

12. A battery (100), comprising a plurality of battery cells (20) according to any one of claims 1 to 11.

13. An electrical device, comprising the battery cell (20) according to any one of claims 1 to 11, wherein the battery cell (20) is operable to provide electrical energy.

14. A battery cell (20) manufacturing method, comprising:
providing a housing (21), wherein an opening is created on the housing (21);
providing an electrode assembly (22) and an insulator (25), wherein the electrode assembly (22) comprises a body portion (221), a first tab (222), and a second tab (223), the first tab (222) and the second tab (223) being of opposite polarities and both located on the same side of the body portion (221), and at least a part of the insulator (25) is disposed between the first tab (222) and the second tab (223);
mounting the electrode assembly (22) and the insulator (25) into the housing (21); and
providing an end cap (23), and fitting the end cap (23) onto the opening,
**characterized in that**:
the insulator (25) includes a first insulating portion (251), two second insulating portions (252), a third insulating portion (253), two fourth insulating portions (254), and a fifth insulating portion (255), wherein the two second insulating portions (252) and the two fourth insulating portions (254) are arranged outside the first insulating portion (251) successively along the circumferential direction (Y) of the body portion (221),
wherein each of the second insulating portions (252) is connected to the first insulating portion (251) and the third insulating portion (253), wherein the first insulating portion (251), the two second insulating portions (252), and the third insulating portion (253) close in to form a first through-hole (257),
wherein each of the fourth insulating portions (254) is connected to the first insulating portion (251) and the fifth insulating portion (255), wherein the first insulating portion (251), the two fourth insulating portions (254), and the fifth insulating portion (255) close in to form a second through-hole (258),
wherein the first tab (222) passes through the first through-hole (257) and a hole wall of the first through-hole (257) restricts deformation of the first tab (222) from outside,
wherein the second tab (223) passes through the second through-hole (258) and a hole wall of the second through-hole (258) restricts deformation of the second tab (223) from outside.

## Patentansprüche

1. Batteriezelle (20), umfassend:
ein Gehäuse (21), an dem eine Öffnung erzeugt ist;
eine Endkappe (23), die über die Öffnung aufgesetzt ist und diese abdeckt;
eine Elektrodenanordnung (22), die in dem Gehäuse (21) untergebracht ist, wobei die Elektrodenanordnung (22) einen Körperabschnitt (221), eine erste Lasche (222) und eine zweite Lasche (223) umfasst, wobei die erste Lasche (222) und die zweite Lasche (223) entgegengesetzte Polaritäten haben und sich beide auf derselben Seite des Körperabschnitts (221) befinden; und
einen Isolator (25), wobei mindestens ein Teil des Isolators (25) zwischen der ersten Lasche (222) und der zweiten Lasche (223) angeordnet ist,
**dadurch gekennzeichnet, dass**:
der Isolator (25) einen ersten Isolierabschnitt (251), zwei zweite Isolierabschnitte (252), einen dritten Isolierabschnitt (253), zwei vierte Isolierabschnitte (254) und einen fünften Isolierabschnitt (255) einschließt, wobei die beiden zweiten Isolierabschnitte (252) und die beiden vierten Isolierabschnitte (254) außerhalb des ersten Isolierabschnitts (251) nacheinander entlang der Umfangsrichtung (Y) des Körperabschnitts (221) angeordnet sind,
wobei jeder der zweiten Isolierabschnitte (252) mit dem ersten Isolierabschnitt (251) und dem dritten Isolierabschnitt (253) verbunden ist, wobei der erste Isolierabschnitt (251), die beiden zweiten Isolierabschnitte (252) und der dritte Isolierabschnitt (253) zusammenlaufen, um ein erstes Durchgangsloch (257) zu bilden,
wobei jeder der vierten Isolierabschnitte (254) mit dem ersten Isolierabschnitt (251) und dem fünften Isolierabschnitt (255) verbunden ist, wobei der erste Isolierabschnitt (251), die beiden vierten Isolierabschnitte (254) und der fünfte Isolierabschnitt (255) zusammenlaufen, um ein zweites Durchgangsloch (258) zu bilden,
wobei die erste Lasche (222) durch das erste Durchgangsloch (257) verläuft und eine Lochwand des ersten Durchgangslochs (257) die Verformung der ersten Lasche (222) von außen verhindert,
wobei die zweite Lasche (223) durch das zweite Durchgangsloch (258) verläuft und eine Lochwand des zweiten Durchgangslochs (258) die Verformung der zweiten Lasche (223) von außen verhindert.

2. Batteriezelle (20) nach Anspruch 1, wobei die erste Lasche (222) einen Basisabschnitt (2221) und einen vorstehenden Abschnitt (2222) umfasst, wobei der Basisabschnitt (2221) aus dem Körperabschnitt (221) herausgeführt wird und der vorstehende Abschnitt (2222) von einer ersten Außenumfangsoberfläche (222a) des Basisabschnitts (2221) in einer radialen Richtung des Körperabschnitts (221) vorsteht.

3. Batteriezelle (20) nach Anspruch 2, wobei in einer axialen Richtung (Z) des Körperabschnitts (221) mindestens ein Teil des vorstehenden Abschnitts (2222) sich auf einer Seite des Isolators (25) befindet, wobei die Seite vom Körperabschnitt (221) abgewandt ist, wobei der vorstehende Abschnitt (2222) und der Körperabschnitt (221) den Isolator (25) vorzugsweise von beiden Seiten einklemmen.

4. Batteriezelle (20) nach Anspruch 3, wobei der Isolator (25) einen ersten Isolierabschnitt (251) umfasst, wobei:
mindestens ein Teil des ersten Isolierabschnitts (251) zwischen dem Basisabschnitt (2221) und der zweiten Lasche (223) angeordnet ist, um eine Verformung des Basisabschnitts (2221) in Richtung der zweiten Lasche (223) zu verhindern; und
in der axialen Richtung (Z) des Körperabschnitts (221) mindestens ein Teil des ersten Isolierabschnitts (251) sich zwischen dem vorstehenden Abschnitt (2222) und dem Körperabschnitt (221) befindet, um eine Verformung des vorstehenden Abschnitts (2222) in Richtung des Körperabschnitts (221) zu verhindern.

5. Batteriezelle nach Anspruch 4, wobei die erste Lasche (222) und die zweite Lasche (223) in einer Umfangsrichtung (Y) des Körperabschnitts (221) beabstandet sind,
wobei der erste Isolierabschnitt (251) ein drittes Durchgangsloch (251b) umfasst, der Körperabschnitt (221) eine Jelly-Roll-Struktur aufweist und ein viertes Durchgangsloch (221a) umfasst, und das dritte Durchgangsloch (251b) und das vierte Durchgangsloch (221a) entlang der axialen Richtung (Z) des Körperabschnitts (221) einander gegenüberliegend angeordnet sind.

6. Batteriezelle (20) nach Anspruch 5, wobei:
der zweite Isolierabschnitt (252) an einer Seite des Basisabschnitts (2221) entlang der Umfangsrichtung (Y) des Körperabschnitts (221) angeordnet ist, um eine Verformung des Basisabschnitts (2221) entlang der Umfangsrichtung (Y) des Körperabschnitts (221) zu verhindern; und vorzugsweise
in der axialen Richtung (Z) des Körperabschnitts (221) mindestens ein Teil des zweiten Isolierabschnitts (252) sich zwischen dem vorstehenden Abschnitt (2222) und dem Körperabschnitt (221) befindet, um eine Verformung des vorstehenden Abschnitts (2222) in Richtung des Körperabschnitts (221) zu verhindern.

7. Batteriezelle (20) nach Anspruch 6, wobei:
der dritte Isolierabschnitt (253) mit einem Ende des zweiten Isolierabschnitts (252) verbunden ist, wobei das Ende vom ersten Isolierabschnitt (251) abgewandt ist; und
der dritte Isolierabschnitt (253) sich an einer Seite des Basisabschnitts (2221) befindet, wobei die Seite vom ersten Isolierabschnitt (251) abgewandt ist, um eine Verformung des Basisabschnitts (2221) vom ersten Isolierabschnitt (251) weg zu verhindern,
wobei vorzugsweise
in der axialen Richtung (Z) des Körperabschnitts (221) mindestens ein Teil des dritten Isolierabschnitts (253) sich zwischen dem vorstehenden Abschnitt (2222) und dem Körperabschnitt (221) befindet, um eine Verformung des vorstehenden Abschnitts (2222) in Richtung des Körperabschnitts (221) zu verhindern.

8. Batteriezelle (20) nach Anspruch 1, wobei der Isolator (25) ferner zwei Verstärkungsabschnitte umfasst;
wobei einer der beiden Verstärkungsabschnitte, der dritte Isolierabschnitt (253), der andere der beiden Verstärkungsabschnitte und der fünfte Isolierabschnitt (255) nacheinander entlang der Umfangsrichtung (Y) des Körperabschnitts (221) verbunden sind, um eine Ringstruktur zu bilden,
wobei vorzugsweise eine Endfläche des Körperabschnitts (221) in Richtung der Endkappe (23) aus einer ersten Region und einer zweiten Region gebildet ist, die erste Lasche (222) und die zweite Lasche (223) aus der ersten Region herausgeführt sind, eine Fläche der zweiten Region S₁ beträgt, eine Fläche eines vom Isolator (25) in der zweiten Region bedeckten Teils S₂ beträgt und ein Wert eines Verhältnisses S₂/S₁ 0,5 bis 0,95 beträgt.

9. Batteriezelle (20) nach einem der Ansprüche 1 bis 4, wobei sowohl die erste Lasche (222) als auch die zweite Lasche (223) eine ringförmige Struktur aufweisen und die erste Lasche (222) die zweite Lasche (223) umgibt; und
der Isolator (25) eine ringförmige Struktur aufweist und sich zwischen der ersten Lasche (222) und der zweiten Lasche (223) befindet.

10. Batteriezelle (20) nach einem der Ansprüche 1 bis 9, wobei in der axialen Richtung (Z) des Körperabschnitts (221) ein Vorsprung des Isolators (25) innerhalb eines Vorsprungs des Körperabschnitts (221) fällt; oder
der Isolator (25) am Körperabschnitt (221) fixiert ist, wobei der Isolator (25) vorzugsweise mit dem Körperabschnitt (221) verbunden ist und/oder der Isolator (25) zwischen der Endkappe (23) und dem Körperabschnitt (221) eingeklemmt ist.

11. Batteriezelle (20) nach einem der Ansprüche 1 bis 10, wobei in einer Richtung senkrecht zur axialen Richtung (Z) des Körperabschnitts (221) ein Mindestabstand zwischen der ersten Lasche (222) und der zweiten Lasche (223) größer oder gleich 0,5 mm ist; und/oder
wobei der Isolator (25) eine einteilig ausgebildete Struktur ist; und/oder
wobei die Batteriezelle (20) ferner einen ersten Elektrodenanschluss (26) und einen zweiten Elektrodenanschluss (24) umfasst, die an der Endkappe (23) angeordnet sind, wobei die erste Lasche (222) konfiguriert ist, um elektrisch mit dem ersten Elektrodenanschluss (26) verbunden zu sein, und die zweite Lasche (223) konfiguriert ist, um elektrisch mit dem zweiten Elektrodenanschluss (24) verbunden zu sein; oder
die Batteriezelle (20) ferner einen zweiten Elektrodenanschluss (24) umfasst, der an der Endkappe (23) angeordnet ist, wobei die erste Lasche (222) konfiguriert ist, um elektrisch mit der Endkappe (23) verbunden zu sein, und die zweite Lasche (223) konfiguriert ist, um elektrisch mit dem zweiten Elektrodenanschluss (24) verbunden zu sein.

12. Batterie (100), umfassend eine Vielzahl von Batteriezellen (20) nach einem der Ansprüche 1 bis 11.

13. Elektrische Vorrichtung, umfassend die Batteriezelle (20) nach einem der Ansprüche 1 bis 11, wobei die Batteriezelle (20) betriebsfähig ist, um elektrische Energie bereitzustellen.

14. Herstellungsverfahren für eine Batteriezelle (20), umfassend:
Bereitstellen eines Gehäuses (21), wobei eine Öffnung an dem Gehäuse (21) erzeugt wird;
Bereitstellen einer Elektrodenanordnung (22) und eines Isolators (25), wobei die Elektrodenanordnung (22) einen Körperabschnitt (221), eine erste Lasche (222) und eine zweite Lasche (223) umfasst, wobei die erste Lasche (222) und die zweite Lasche (223) entgegengesetzte Polaritäten haben und sich beide auf derselben Seite des Körperabschnitts (221) befinden, und wobei mindestens ein Teil des Isolators (25) zwischen der ersten Lasche (222) und der zweiten Lasche (223) angeordnet ist;
Montieren der Elektrodenanordnung (22) und des Isolators (25) in das Gehäuse (21); und
Bereitstellen einer Endkappe (23) und Aufsetzen der Endkappe (23) auf die Öffnung,
**dadurch gekennzeichnet, dass**:
der Isolator (25) einen ersten Isolierabschnitt (251), zwei zweite Isolierabschnitte (252), einen dritten Isolierabschnitt (253), zwei vierte Isolierabschnitte (254) und einen fünften Isolierabschnitt (255) einschließt, wobei die beiden zweiten Isolierabschnitte (252) und die beiden vierten Isolierabschnitte (254) außerhalb des ersten Isolierabschnitts (251) nacheinander entlang der Umfangsrichtung (Y) des Körperabschnitts (221) angeordnet sind,
wobei jeder der zweiten Isolierabschnitte (252) mit dem ersten Isolierabschnitt (251) und dem dritten Isolierabschnitt (253) verbunden ist, wobei der erste Isolierabschnitt (251), die beiden zweiten Isolierabschnitte (252) und der dritte Isolierabschnitt (253) zusammenlaufen, um ein erstes Durchgangsloch (257) zu bilden,
wobei jeder der vierten Isolierabschnitte (254) mit dem ersten Isolierabschnitt (251) und dem fünften Isolierabschnitt (255) verbunden ist, wobei der erste Isolierabschnitt (251), die beiden vierten Isolierabschnitte (254) und der fünfte Isolierabschnitt (255) zusammenlaufen, um ein zweites Durchgangsloch (258) zu bilden,
wobei die erste Lasche (222) durch das erste Durchgangsloch (257) verläuft und eine Lochwand des ersten Durchgangslochs (257) eine Verformung der ersten Lasche (222) von außen verhindert,
wobei die zweite Lasche (223) durch das zweite Durchgangsloch (258) verläuft und eine Lochwand des zweiten Durchgangslochs (258) eine Verformung der zweiten Lasche (223) von außen verhindert.

## Revendications

1. Cellule de batterie (20), comprenant :
un logement (21), sur lequel une ouverture est créée ;
un capuchon d'extrémité (23), ajusté sur et couvrant l'ouverture ;
un ensemble électrode (22), reçu dans le logement (21), l'ensemble électrode (22) comprenant une partie corps (221), une première patte (222) et une deuxième patte (223), la première patte (222) et la deuxième patte (223) étant de polarités opposées et toutes deux situées sur le même côté de la partie corps (221) ; et
un isolateur (25), au moins une partie de l'isolateur (25) étant disposée entre la première patte (222) et la deuxième patte (223),
**caractérisée en ce que** :
l'isolateur (25) inclut une première partie d'isolation (251), deux deuxièmes parties d'isolation (252), une troisième partie d'isolation (253), deux quatrièmes parties d'isolation (254), et une cinquième partie d'isolation (255), les deux deuxièmes parties d'isolation (252) et les deux quatrièmes parties d'isolation (254) étant agencées à l'extérieur de la première partie d'isolation (251) successivement le long de la direction circonférentielle (Y) de la partie corps (221),
chacune des deuxièmes parties d'isolation (252) étant reliée à la première partie d'isolation (251) et la troisième partie d'isolation (253), la première partie d'isolation (251), les deux deuxièmes parties d'isolation (252), et la troisième partie d'isolation (253) se rapprochant pour former un premier trou traversant (257),
chacune des quatrièmes parties d'isolation (254) étant reliée à la première partie d'isolation (251) et la cinquième partie d'isolation (255), la première partie d'isolation (251), les deux quatrièmes parties d'isolation (254), et la cinquième partie isolation (255) se rapprochant pour former un deuxième trou traversant (258),
la première patte (222) passe à travers le premier trou traversant (257) et une paroi de trou du premier trou traversant (257) limite une déformation de la première patte (222) depuis l'extérieur,
la deuxième patte (223) passe à travers le deuxième trou traversant (258) et une paroi de trou du deuxième trou traversant (258) limite une déformation de la deuxième patte (223) depuis l'extérieur.

2. Cellule de batterie (20) selon la revendication 1, dans laquelle la première patte (222) comprend une partie base (2221) et une partie saillante (2222), la partie base (2221) est conduite hors de la partie corps (221), et la partie en saillante (2222) dépasse d'une première surface périphérique externe (222a) de la partie base (2221) dans une direction radiale de la partie corps (221).

3. Cellule de batterie (20) selon la revendication 2, dans laquelle dans une direction axiale (Z) de la partie corps (221), au moins une partie de la partie saillante (2222) est située sur un côté de l'isolateur (25), le côté étant éloigné de la partie corps (221), la partie saillante (2222) et la partie corps (221) serrant de préférence l'isolateur (25) des deux côtés.

4. Cellule de batterie (20) selon la revendication 3, dans laquelle l'isolateur (25) comprend une première partie d'isolation (251), dans laquelle :
au moins une partie de la première partie d'isolation (251) est disposée entre la partie base (2221) et la deuxième patte (223) pour limiter une déformation de la partie base (2221) vers la deuxième patte (223) ; et
dans la direction axiale (Z) de la partie corps (221), au moins une partie de la première partie d'isolation (251) est située entre la partie saillante (2222) et la partie corps (221) pour limiter une déformation de la partie saillante (2222) en direction de la partie corps (221).

5. Cellule de batterie selon la revendication 4, dans laquelle la première patte (222) et la deuxième patte (223) sont espacées dans une direction circonférentielle (Y) de la partie corps (221),
la première partie d'isolation (251) comprend un troisième trou traversant (251b), la partie corps (221) adopte une structure en gâteau roulé et comprend un quatrième trou traversant (221a), et le troisième trou traversant (251b) et le quatrième trou traversant (221a) sont disposés en regard l'un de l'autre le long de la direction axiale (Z) de la partie corps (221).

6. Cellule de batterie (20) selon la revendication 5, dans laquelle :
la deuxième partie d'isolation (252) est disposée sur un côté de la partie base (2221) le long de la direction circonférentielle (Y) de la partie corps (221) pour limiter une déformation de la partie base (2221) le long de la direction circonférentielle (Y) de la partie corps (221) ; et de préférence,
dans la direction axiale (Z) de la partie corps (221), au moins une partie de la deuxième partie d'isolation (252) est située entre la partie saillante (2222) et la partie corps (221) pour limiter une déformation de la partie saillante (2222) en direction de la partie corps (221).

7. Cellule de batterie (20) selon la revendication 6, dans laquelle :
la troisième partie d'isolation (253) est raccordée à une extrémité de la deuxième partie d'isolation (252), l'extrémité étant éloignée de la première partie d'isolation (251) ; et
la troisième partie d'isolation (253) est située sur un côté de la partie base (2221), le côté étant éloigné de la première partie d'isolation (251), de sorte à limiter une déformation de la partie base (2221) en s'éloignant de la première partie d'isolation (251),
dans laquelle de préférence,
dans la direction axiale (Z) de la partie corps (221), au moins une partie de la troisième partie d'isolation (253) est située entre la partie saillante (2222) et la partie corps (221) pour limiter une déformation de la partie saillante (2222) en direction de la partie corps (221).

8. Cellule de batterie (20) selon la revendication 1, dans laquelle l'isolateur (25) comprend deux parties de renforcement ;
l'une des deux parties de renforcement, la troisième partie d'isolation (253), l'autre des deux parties de renforcement, et la cinquième partie d'isolation (255) étant raccordées successivement le long de la direction circonférentielle (Y) de la partie corps (221) pour former une structure annulaire,
de préférence, une face d'extrémité de la partie corps (221) en direction du capuchon d'extrémité (23) étant formée d'une première région et d'une deuxième région, la première patte (222) et la deuxième patte (223) étant conduite hors de la première région, une aire de la deuxième région étant S₁, une aire d'une partie couverte par l'isolateur (25) dans la deuxième région étant S₂, et une valeur d'un rapport S₂/S₁ étant de 0,5 à 0,95.

9. Cellule de batterie (20) selon l'une quelconque des revendications 1 à 4, dans laquelle chacune de la première patte (222) et la deuxième patte (223) est formée d'une structure annulaire, et la première patte (222) entoure la deuxième patte (223) ; et
l'isolateur (25) est de structure annulaire et est situé entre la première patte (222) et la deuxième patte (223).

10. Cellule de batterie (20) selon l'une quelconque des revendications 1 à 9, dans laquelle dans la direction axiale (Z) de la partie corps (221), une projection de l'isolateur (25) se situe à l'intérieur d'une projection de la partie corps (221) ; ou
l'isolateur (25) est fixé à la partie corps (221), de préférence, l'isolateur (25) étant lié à la partie corps (221), et/ou l'isolateur (25) étant serré entre le capuchon d'extrémité (23) et la partie corps (221).

11. Cellule de batterie (20) selon l'une quelconque des revendications 1 à 10, dans laquelle dans une direction perpendiculaire à la direction axiale (Z) de la partie corps (221), un espacement minimum entre la première patte (222) et la deuxième patte (223) est supérieur ou égal à 0,5 mm ; et/ou
dans laquelle l'isolateur (25) est une structure formée d'une seule pièce ; et/ou
dans laquelle la cellule de batterie (20) comprend en outre une première borne d'électrode (26) et une deuxième borne d'électrode (24) disposées sur le capuchon d'extrémité (23), la première patte (222) étant conçue pour être électriquement raccordée à la première borne d'électrode (26), et la deuxième patte (223) étant conçue pour être électriquement raccordée à la deuxième borne d'électrode (24) ; ou
la cellule de batterie (20) comprenant en outre une deuxième borne d'électrode (24) disposée sur le capuchon d'extrémité (23), la première patte (222) étant conçue pour être électriquement raccordée au capuchon d'extrémité (23), et la deuxième patte (223) étant conçue pour être électriquement raccordée à la deuxième borne d'électrode (24).

12. Batterie (100), comprenant une pluralité de cellules de batterie (20) selon l'une quelconque des revendications 1 à 11.

13. Dispositif électrique, comprenant la cellule de batterie (20) selon l'une quelconque des revendications 1 à 11, la cellule de batterie (20) étant conçue pour fournir de l'énergie électrique.

14. Procédé de fabrication de cellule de batterie (20), comprenant les étapes consistant à :
fournir un logement (21), une ouverture étant ménagée sur du logement (21) ;
fournir un ensemble électrode (22) et un isolateur (25), l'ensemble électrode (22) comprenant une partie corps (221), une première patte (222), et une deuxième patte (223), la première patte (222) et la deuxième patte (223) étant de polarités opposées et toutes deux situées sur le même côté de la partie corps (221), et au moins une partie de l'isolateur (25) étant disposée entre la première patte (222) et la deuxième patte (223) ;
monter l'ensemble électrode (22) et l'isolateur (25) dans le logement (21) ; et
fournir un capuchon d'extrémité (23), et ajuster le capuchon d'extrémité (23) sur l'ouverture,
**caractérisé en ce que** :
l'isolateur (25) inclut une première partie d'isolation (251), deux deuxièmes parties d'isolation (252), une troisième partie d'isolation (253), deux quatrièmes parties d'isolation (254), et une cinquième partie d'isolation (255), les deux deuxièmes parties d'isolation (252) et les deux quatrièmes parties d'isolation (254) étant agencées à l'extérieur de la première partie d'isolation (251) successivement le long de la direction circonférentielle (Y) de la partie corps (221),
chacune des deuxièmes parties d'isolation (252) étant reliée à la première partie d'isolation (251) et la troisième partie d'isolation (253), la première partie d'isolation (251), les deux deuxièmes parties d'isolation (252), et la troisième partie d'isolation (253) se rapprochant pour former un premier trou traversant (257),
chacune des quatrièmes parties d'isolation (254) étant reliée à la première partie d'isolation (251) et la cinquième partie d'isolation (255), la première partie d'isolation (251), les deux quatrièmes parties d'isolation (254), et la cinquième partie isolation (255) se rapprochant pour former un deuxième trou traversant (258),
la première patte (222) passe à travers le premier trou traversant (257) et une paroi de trou du premier trou traversant (257) limite une déformation de la première patte (222) depuis l'extérieur,
la deuxième patte (223) passe à travers le deuxième trou traversant (258) et une paroi de trou du deuxième trou traversant (258) restreint une déformation de la deuxième patte (223) depuis l'extérieur.
